# EUROPÄISCHE PATENTSCHRIFT

(11) **EP 3 347 706 B1**
(45) Veröffentlichungstag und Bekanntmachung des Hinweises auf die Patenterteilung: **30.12.2020**
(21) Anmeldenummer: 16760651.6
(22) Anmeldetag: 29.08.2016
(51) Int. Cl.: G01N 23/083, G01N 23/18, G01M 17/02

(54) **VORRICHTUNG ZUR ZERSTÖRUNGSFREIEN MATERIALPRÜFUNG VON GEGENSTÄNDEN, INSBESONDERE VON FELGEN UND RÄDERN AUS LEICHTMETALLGUSS**
DEVICE FOR NON-DESTRUCTIVE MATERIAL TESTING OF OBJECTS, IN PARTICULAR RIMS AND WHEELS MADE OF ALUMINUM ALLOY
DISPOSITIF POUR LE CONTRÔLE NON DESTRUCTIF DE MATÉRIAUX D'OBJETS, EN PARTICULIER DE JANTES ET DE ROUES EN ALLIAGE LÉGER

(30) Priorität: 07.09.2015 DE 102015011435
(43) Veröffentlichungstag der Anmeldung: 18.07.2018
(73) Patentinhaber: Yxlon International Gmbh, 22419 Hamburg (DE)
(72) Erfinder: BOGUMIL, Frank, 23795 Bad Segeberg (DE); KRÜGER, Reinhard, 22147 Hamburg (DE); MALIN, Joscha, 20144 Hamburg (DE); MELCHERT, Jürgen, 23843 Bad Oldesloe (DE); FREIHERR VON OLDERSHAUSEN, Florian, 22457 Hamburg (DE); OTTENS, Erhard, 25368 Kiebitzreihe (DE); SCHLÜTER, Heiko, 25377 Kollmar (DE)
(74) Vertreter: Weidner Stern Jeschke
(86) Internationale Anmeldenummer: PCT/EP2016/001456
(87) Internationale Veröffentlichungsnummer: WO 2017/041877

(56) Entgegenhaltungen:
- EP-A1- 1 340 512
- EP-A2- 2 253 947
- DE-A1-102007 000 305
- US-A- 5 740 221

## Beschreibung

Die Erfindung betrifft eine Vorrichtung zur zerstörungsfreien Materialprüfung von Gegenständen, insbesondere von Felgen und Rädern aus Leichtmetallguss, mit einer Durchleuchtungskabine, die eine Durchleuchtungseinrichtung zum Durchleuchten der Gegenstände enthält, sowie mit Fördereinrichtungen zum Fördern der Gegenstände durch mindestens eine Schleuse in die Durchleuchtungskabine und aus der Durchleuchtungskabine heraus.

Kraftfahrzeugräder aus Leichtmetallguss müssen vor ihrem Einsatz einer zerstörungsfreien Materialprüfung unterzogen werden, die es ermöglicht, Räder mit Gussfehlern auszusondern. Zu diesem Zweck werden Vorrichtungen der eingangs genannten Art verwendet, in deren Durchleuchtungskabinen verschiedene Teilbereiche der Kraftfahrzeugfelgen nacheinander mit Röntgenstrahlung durchleuchtet werden.

Derartige Vorrichtungen sind unter anderem aus der EP 2 253 947 A1 und aus der WO 03/085416 A1 bekannt. Diese Vorrichtungen umfassen jeweils eine Durchleuchtungskabine, in der eine Röntgenstrahlungsquelle und ein Bilddetektor angeordnet sind, sowie zwei Schleusenkabinen, die in Transportrichtung der Räder vor und hinter der Durchleuchtungskabine angeordnet sind. In den Wänden zwischen den Kabinen sind Durchlässe für die Räder angeordnet, die durch Schotte verschließbar sind, um ein Entweichen von Röntgenstrahlung aus der Durchleuchtungskabine zu verhindern. Wenn ein Rad aus der ersten Schleusenkabine in die Durchleuchtungskabine oder aus der Durchleuchtungskabine heraus in die zweite Schleusenkabine gefördert werden soll, wird das jeweils entsprechende Schott geöffnet.

Da die Lebensdauer von Röntgenstrahlungsquellen abnimmt, wenn diese häufig ein-und ausgeschaltet werden, lässt man die Röntgenstrahlungsquellen vorzugsweise dauernd eingeschaltet. Dadurch kann jedoch beim Öffnen eines Schotts Röntgenstrahlung durch den Durchlass in die benachbarte Schleusenkabine gelangen. Um zu verhindern, dass diese Röntgenstrahlung nach außen in die Umgebung dringt und dadurch das Bedienungspersonal einer zu hohen Strahlungsdosis ausgesetzt wird, ist bei der Vorrichtung aus der EP 2 253 947 A1 auch am Einlass der ersten Schleuse und am Auslass der zweiten Schleuse ein Schott vorgesehen. Dieses Schott wird geschlossen, bevor das Schott zwischen der Schleusenkabine und der Durchleuchtungskabine geöffnet wird. Zum Erfassen des Schließ- und Öffnungszustandes der Schotte sind jedoch Schalter erforderlich, deren ordnungsgemäße Funktion stets gewährleistet sein muss. Wegen der durch die Durchlässe in die Schleusenkabinen eindringenden Röntgenstrahlung müssen außerdem nicht nur die Wände, die Decke und der Boden der Durchleuchtungskabine sondern auch die Wände, die Decke und der Boden der Schleusenkabinen mit einer Abschirmung aus einem bleihaltigen Material versehen werden, wozu viel Blei benötigt wird.

Aus der US 5 749 221 und der DE 197 46 594 C2 ist bereits eine Vorrichtung gemäß dem Oberbegriff des Anspruchs 1 bekannt, bei der die Drehachse des Hohlzylinders (seine Zylinderachse) vertikal und senkrecht zu einem geradlinigen horizontalen Transportweg der Gegenstände ausgerichtet ist. Wegen der Relativbewegung des Förderers in Bezug zum Hohlzylinder ist jedoch eine strahlungsundurchlässige Abdichtung zwischen der unteren Stirnfläche des Hohlzylinders und der Auflagefläche des Förderers praktisch nicht möglich, so dass eine den Hohlzylinder umgebende Schleusenkabine ganz mit Blei verkleidet werden muss.

Aus der DE 41 12 470 A1 ist es bekannt, Fluggepäck durch eine Kammer hindurch zu befördern und in der Kammer einem Unterdruck auszusetzen. Die Kammer weist am Eingang eine Schleuse auf, die aus einem ortsfesten Hohlzylinder mit zwei entgegengesetzten Öffnungen in seiner Umfangswand sowie einem um eine horizontale Drehachse drehbaren sternförmigen Zellenrad besteht, dessen Zellen durch die Drehung abwechselnd vor eine der beiden Öffnungen bewegt werden können.

Ausgehend hiervon liegt der Erfindung die Aufgabe zugrunde, eine Vorrichtung der eingangs genannten Art dahingehend zu verbessern, dass ein Entweichen von Röntgenstrahlung durch die Schleuse(n) in die Umgebung mit geringerem Aufwand verhindert, die Menge des zur Abschirmung benötigten Bleis reduziert und ggf. der Platzbedarf der Vorrichtung verkleinert werden kann.

Diese Aufgabe wird erfindungsgemäß durch die Merkmale im Anspruch 1 gelöst.

Da die Umfangswand des Hohlzylinders nur eine einzige Durchtrittsöffnung aufweist, kann sichergestellt werden, dass die Schleuse niemals sowohl zur Durchleuchtungskabine und zur entgegengesetzten Seite hin offen ist, so dass ein direkter Hindurchtritt von Röntgenstrahlung durch die Schleuse sicher verhindert werden kann. Außerdem kann bereits durch eine an der Umfangswand und an den entgegengesetzten Stirnenden des Hohlzylinders angeordnete Abschirmung aus bleihaltigem Material sichergestellt werden, dass Röntgenstrahlung, die bei geöffnetem Durchlass zwischen der Schleuse und der Durchleuchtungskabine in den Hohlzylinder gelangt, nicht wieder aus diesem austreten kann. Da die Oberfläche der Umfangswand und der Stirnenden des Hohlzylinders bedeutend kleiner ist als die Oberfläche der Wände, der becke und des Bodens einer den Hohlzylinder umgebenden Schleusenkabine, kann zudem die Menge des zur Abschirmung benötigten Bleis erheblich reduziert werden. Darüber hinaus kann der Platzbedarf der Vorrichtung reduziert werden, indem die Breite der Schleusenkabine durch Heranrücken der Seitenwände an die Stirnenden des Hohlzylinders an die axiale Länge des Hohlzylinders angepasst wird.

Die erfindungsgemäße Vorrichtung wird bevorzugt zur zerstörungsfreien Materialprüfung von rotationssymmetrischen Felgen oder Rädern aus Leichtmetallguss eingesetzt, kann jedoch grundsätzlich auch zur zerstörungsfreien Materialprüfung von beliebigen anderen Gegenständen verwendet werden.

Vorzugsweise werden die Gegenstände bei der zerstörungsfreien Materialprüfung durch die Durchleuchtungskabine hindurch gefördert, wobei sie an einer Seite in diese eintreten und an der entgegengesetzten Seite wieder aus dieser austreten. In diesem Fall sind vor und hinter der Durchleuchtungskabine zwei im Wesentlichen baugleiche Schleusen bzw. Schleusenkabinen vorgesehen. Alternativ können die Gegenstände jedoch auch an einer Seite in die Durchleuchtungskabine eintreten und wieder aus dieser austreten, in welchem Fall eine einzige Schleuse bzw. Schleusenkabine ausreichend ist. Im Folgenden wird der zuerst genannte bevorzugte Fall beschrieben.

Um es zu ermöglichen, die Gegenstände durch die Hohlzylinder der Schleusen hindurch zu fördern, weist vorteilhaft jede Schleuse einen Förderer auf, der vollständig im Inneren des Hohlzylinders angeordnet ist, wobei seine entgegengesetzten Enden zweckmäßig einen geringen Abstand von der Umfangswand des Hohlzylinders aufweisen. Dadurch ist der Hohlzylinder um den stationär im Inneren des Hohlzylinders angeordneten Förderer drehbar, um die Durchtrittsöffnung abwechselnd vor dem in Transportrichtung vorderen bzw. hinteren Ende des Förderers anzuordnen.

Daneben umfassen die Fördereinrichtungen weitere Förderer, die innerhalb von der Durchleuchtungskabine sowie auf den zur Durchleuchtungskabine entgegengesetzten Seiten der Schleusen bzw. Schleusenkabinen angeordnet sind und vorteilhaft ebenso wie die Förderer in den Schleusen eine zu den Drehachsen der Hohlzylinder parallele horizontale Auflagefläche für die Gegenstände besitzen. Um den Innenraum der Hohlzylinder optimal auszunutzen, ist diese Auflagefläche vorteilhaft in einem Abstand unterhalb von der Drehachse der Hohlzylinder angeordnet.

Grundsätzlich ist es möglich, jeden Hohlzylinder an einem seiner Stirnenden geschlossen auszubilden und ähnlich wie die Trommel einer Seitenlader-Waschmaschine drehbar an einer der beiden Seitenwände der zugehörigen Schleusenkabine zu lagern. In diesem Fall wird der im Hohlzylinder angeordnete Förderer von einseitig auskragenden Stützen getragen, die sich durch das offene Stirnende des Hohlzylinders erstrecken und zweckmäßig am Boden der Schleusenkabine abgestützt sind. Außerdem ist dann das geschlossene Stirnende des Hohlzylinders selbst mit einer Abschirmung aus bleihaltigem Material versehen, während am entgegengesetzten offenen Stirnende die Abschirmung aus dem bleihaltigen Material vorteilhaft an der benachbarten Seitenwand der Schleusenkabine angebracht ist.

Bevorzugt weist der Hohlzylinder jedoch zwei offene Stirnenden auf. In diesem Fall erstrecken sich die den Förderer tragenden Stützen vorteilhaft durch beide offene Stirnenden des Hohlzylinders zum Boden der Schleusenkabine. Außerdem sind dann die Abschirmungen aus dem bleihaltigen Material gegenüber von beiden offenen Stirnenden des Hohlzylinders an den Seitenwänden der Schleusenkabine angebracht. Auch aus diesem Grund ist es von Vorteil, die Seitenwände so nahe wie möglich an die Stirnenden des Hohlzylinders heranzurücken.

Zu Wartungszwecken umfasst mindestens eine der zwei Seitenwände der Schleusenkabine eine große Türe oder ist als Türe ausgebildet, vorzugsweise eine Seitenwand, die einem offenen Stirnende des Hohlzylinders gegenüberliegt, so dass dieser in Richtung seiner Drehachse aus der Schleusenkabine herausgezogen werden kann.

Die Abschirmung an der Umfangswand und am Stirnende oder den Stirnenden des Hohlzylinders sowie an der oder den Seitenwänden der Schleusenkabinen besteht zweckmäßig aus einem Belag aus einem Sandwichmaterial, das eine Schicht aus Blei zwischen zwei Stahlblechen umfasst. Abgesehen von der Abschirmung, die gegenüber von dem oder den offenen Stirnenden des Hohlzylinders vorgesehen ist, kann in beiden Fällen entweder auf eine weitere Abschirmung mit einem bleihaltigen Material an den Wänden, der Decke und dem Boden verzichtet oder diese infolge einer sehr viel geringeren Strahlungsexposition mit einer erheblich geringeren Menge an Blei ausgebildet werden.

Allerdings ist es von Vorteil, zur Abschirmung weiteres bleihaltiges Material im Bereich der Spalte vorzusehen, die zwischen dem rotierenden Hohlzylinder und benachbarten ortsfesten Oberflächen vorhanden sind, so dass durch diese Spalte keine Strahlung aus dem Hohlzylinder austreten kann.

Zu diesem Zweck ist vorteilhaft gegenüber von dem offenen Stirnende oder den offenen Stirnenden des Hohlzylinders an der benachbarten Seitenwand der Schleusenkabine ein nach innen zum Hohlzylinder hin überstehender Steg aus einem bleihaltigen Material angebracht, der sich zumindest entlang von einem Teil der Umfangswand des Hohlzylinders erstreckt und mit dieser einen Spalt begrenzt. Um aus dem Hohlzylinder heraus zu gelangen, müsste die Röntgenstrahlung in den Spalt eindringen und im Spalt mehrfach reflektiert werden, was nicht oder nur in sehr geringem Ausmaß der Fall ist.

Darüber hinaus ist vorteilhaft, zwischen dem Hohlzylinder und der Durchleuchtungskabine innerhalb der Schleusenkabine ein Kragen aus einem bleihaltigen Material vorgesehen, der einen in die Durchleuchtungskabine führenden offenen Durchlass für die Gegenstände umgibt und sich vorteilhaft bis in die Nähe der Umfangswand des Hohlzylinders erstreckt, so dass dort praktisch keine Röntgenstrahlung aus der Durchleuchtungskabine am Hohlzylinder vorbei in die Schleusenkabine gelangen kann. Die Abschirmung in diesem Bereich kann noch dadurch verbessert werden, dass am Kragen eine überstehende Platte aus einem bleihaltigen Material angebracht ist, die sich in axialer Richtung und in Umfangsrichtung entlang von einem Teil der Umfangswand des Hohlzylinders erstreckt und mit der Umfangswand einen Spalt begrenzt. Die Platte besitzt zweckmäßig eine dem Hohlzylinder zugewandte konkav gekrümmte Oberfläche, deren Krümmungsradius etwas größer als derjenige der Umfangswand des Hohlzylinders ist. Diese letztere begrenzt zusammen mit der Platte einen Spalt, in dem ggf. eindringende Röntgenstrahlung aufgrund der großen Spaltlänge vielfach reflektiert und dadurch stark abgeschwächt wird.

Der Spalt zwischen der Platte und der Umfangswand des Hohlzylinders kann zweckmäßig so ausgebildet sein, dass die zuvor genannten, über die Innenseite der Seitenwände bzw. Türen der Schleusenkabine überstehenden Stege aus bleihaltigem Material in den Spalt eintreten und damit dessen Labyrinth-Wirkung verstärken.

Aufgrund der horizontalen Drehachse kann der Hohlzylinder gemäß einer weiteren bevorzugten Ausgestaltung von mehreren drehbaren Stützrollen getragen wird, die vorteilhaft wiederum am Boden der Schleusenkabine abgestützt sind. Auf diese Weise kann eine Aufhängung des Hohlzylinders an der Decke der Schleusenkabine vermieden werden, was bei einer vertikalen Drehachse notwendig wäre. Die Stützrollen liegen zweckmäßig gegen die äußere Oberfläche der Umfangswand an und rollen auf dieser ab.

Zumindest dort, wo beide Stirnenden des Hohlzylinders offen sind, erfolgt der Antrieb des Hohlzylinders vorteilhaft mittels eines Drehantriebs, der einen Umschlingungstrieb umfasst. Der letztere umfasst zweckmäßig mindestens einen Zahnriemen, der um einen Teil der Umfangswand des Hohlzylinders und ein unterhalb des Hohlzylinders angeordnetes Antriebszahnrad eines Antriebsmotors herumgelegt ist und mittels einer oder mehrerer Spannrollen gespannt wird.

Vorzugsweise wird der Hohlzylinder im Betrieb vom Drehantrieb mit variierender Drehrichtung um etwa 180 Grad gedreht, um die Durchtrittsöffnung abwechselnd an den entgegengesetzten Seiten der Schleuse zu positionieren. Alternativ ist es jedoch auch möglich, den Hohlzylinder zu diesem Zweck mit derselben Drehrichtung um 360 Grad zu drehen.

Wie bei der Vorrichtung aus der WO 03/085416 A1 kann beim Prüfen von Rädern die einlaufseitige Schleusenkabine zur Identifizierung der Räder genutzt werden. Dazu ist oberhalb des Hohlzylinders an oder nahe der Decke der Schleusenkabine eine Kamera montiert, welche das in der Schleuse befindliche Rad von oben her visuell erfasst, sobald die Durchtrittsöffnung des Hohlzylinders nach oben weist und sich zwischen der Kamera und dem Rad befindet.

Im Folgenden wird die Erfindung anhand eines in der Zeichnung dargestellten Ausführungsbeispiels näher erläutert.
Fig. 1 zeigt eine teilweise weggeschnittene perspektivische Ansicht einer erfindungsgemäßen Vorrichtung zur zerstörungsfreien Materialprüfung von Rädern aus Leichtmetallguss mit einer Durchleuchtungskabine sowie einer Einlaufschleuse und einer Auslaufschleuse unmittelbar nach der Zufuhr eines Rades in die Einlaufschleuse;
Fig. 2 zeigt eine Ansicht entsprechend Fig. 1, jedoch während der Identifikation des Rades innerhalb der Einlaufschleuse;
Fig. 3 zeigt eine Ansicht entsprechend Fig. 1 und 2, jedoch kurz vor dem Weitertransport des Rades in die Durchleuchtungskabine;
Fig. 4 zeigt eine andere teilweise weggeschnittene perspektivische Ansicht der Vorrichtung während der Identifikation des Rades in der Einlaufschleuse;
Fig. 5 zeigt eine teilweise weggeschnittene Seitenansicht der Vorrichtung;
Fig. 6 zeigt eine teilweise weggeschnittene vergrößerte perspektivische Ansicht von Teilen der Einlaufschleuse;
Fig. 7 zeigt eine weitere teilweise weggeschnittene vergrößerte perspektivische Ansicht von Teilen der Einlaufschleuse;
Fig. 8 zeigt eine andere teilweise weggeschnittene vergrößerte perspektivische Ansicht von Teilen der Einlaufschleuse;
Fig. 9 zeigt eine noch andere teilweise weggeschnittene vergrößerte perspektivische Ansicht von Teilen der Einlaufschleuse.

Die in der Zeichnung dargestellte Vorrichtung 10 dient zur zerstörungsfreien Materialprüfung von Gegenständen in Form von Kraftfahrzeugrädern 12 aus Leichtmetallguss mit Hilfe von Röntgenstrahlen.

Die Vorrichtung 10 umfasst eine mittlere Durchleuchtungskabine 14, in der die Materialprüfung vorgenommen wird, sowie zwei Schleusenkabinen 16, 18 einer Einlaufschleuse 20 und einer Auslaufschleuse 22, die in Transportrichtung (Pfeil T) der Räder 12 auf entgegengesetzten Seiten der Durchleuchtungskabine 14 angeordnet sind. Die Vorrichtung 10 umfasst darüber hinaus Fördereinrichtungen, mit denen die Räder 12 entlang eines geradlinigen horizontalen Transportwegs zuerst durch die Einlaufschleuse 20 in die Durchleuchtungskabine 14 und dann durch die Auslaufschleuse 22 aus der Durchleuchtungskabine 14 heraus gefördert werden. Die beiden Schleusen 20, 22 sollen verhindern, dass beim Transport der Räder 12 Röntgenstrahlung aus der Durchleuchtungskabine 14 in die Umgebung entweicht. Die Durchleuchtungskabine 14 und die beiden Schleusen 20, 22 weisen einen symmetrischen Aufbau auf, was es ermöglicht, die Transportrichtung umzukehren.

Die quaderförmige Durchleuchtungskabine 14 besitzt vier vertikale Wände, einen Boden und eine Decke, die alle mit einem Sandwich-Schichtmaterial aus Stahl- und Bleischichten (nicht dargestellt) belegt sind, so dass keine Röntgenstrahlung durch die Wände, den Boden und die Decke in die Umgebung gelangen kann. In den beiden entgegengesetzten Wänden zwischen der Durchleuchtungskabine 14 und den Schleusenkabinen 16, 18 der Einlass- und Auslassschleuse 20, 22 befindet sich jeweils ein rechteckiger Durchlass 24, 26 für den Eintritt und Austritt der Räder 12. Die beiden Durchlässe 24, 26 liegen sich entlang des Transportwegs gegenüber und sind nicht durch Schotte verschließbar.

Im Inneren der Durchleuchtungskabine 14 befinden sich eine Durchleuchtungseinrichtung 28 zum Durchleuchten der Räder 12, eine auf einem Trägertisch 30 in Transportrichtung verfahrbare Manipulationseinrichtung 32 zum Ergreifen, Anheben und Drehen der Räder 12, sowie zwei Kettenförderer 34, 36, von denen einer die Räder 12 vom einlassseitigen Durchlass 24 bis zur Manipulationseinrichtung 32 und der andere die Räder 12 von der Manipulationseinrichtung 32 bis zum auslassseitigen Durchlass 26 fördert.

Die Durchleuchtungseinrichtung 28 umfasst eine unterhalb vom Transportweg der Räder 12 angeordnete Röntgenstrahlungsquelle 38 und einen digitalen Bilddetektor 40, der oberhalb vom Transportweg und von der Röntgenstrahlungsquelle 38 angeordnet ist.

Die Röntgenstrahlungsquelle 38 und der Bilddetektor 40 sind übereinander an einem Träger 42 angebracht, der um eine zur Transportrichtung senkrechte horizontale Schwenkachse hin und her verschwenkbar ist (Pfeil S). Der Bilddetektor 40 ist durch einen beweglichen Ausleger 44 mit dem Träger 42 verbunden, so dass er entlang einer optischen Achse des Strahlungskegels 46 auf die Röntgenstrahlungsquelle 38 zu und von dieser weg bewegt werden kann.

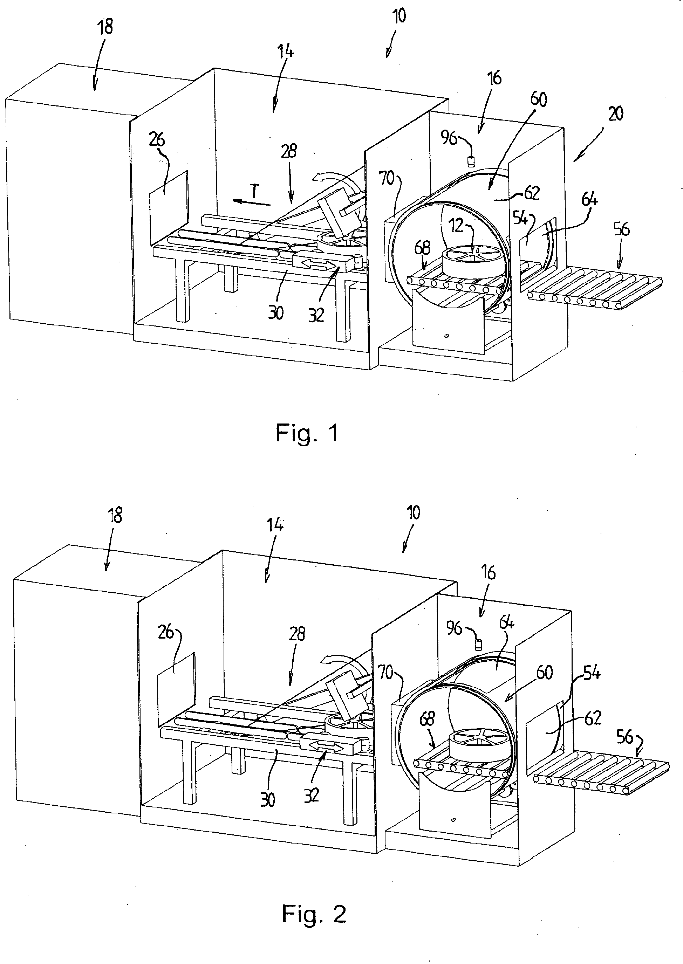

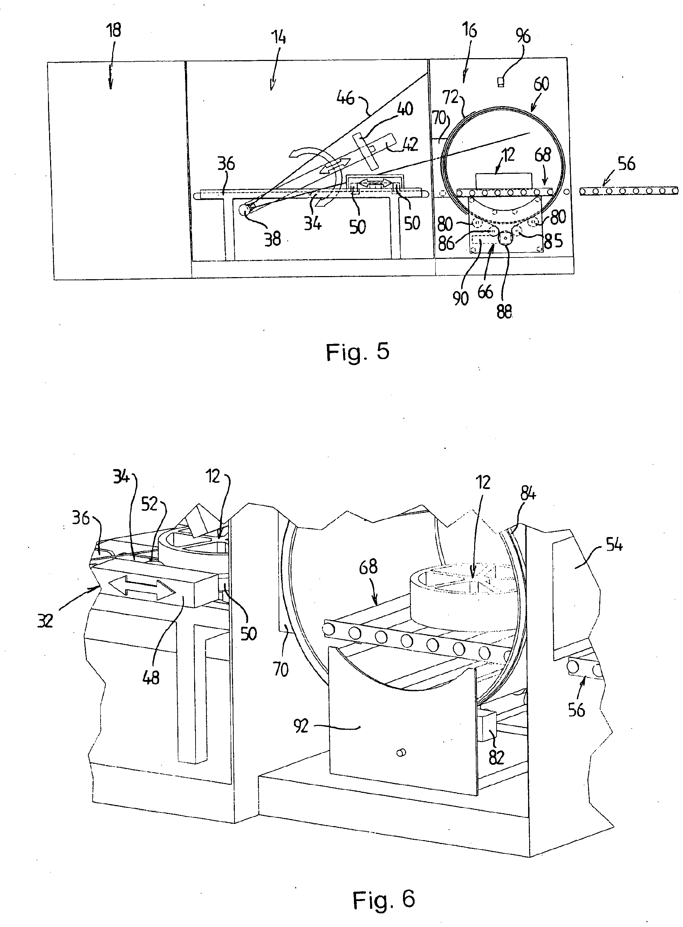

Die Röntgenstrahlungsquelle 38 bleibt während der Dauer der Materialprüfung durchgehend eingeschaltet, auch wenn sich gerade kein Rad 12 im Strahlungskegel 46 befindet. Dadurch wird stets Röntgenstrahlung erzeugt, zum Beispiel auch während ein Rad 12 durch einen der Durchlässe 24, 26 hindurch bewegt wird. Wenn sich zu diesem Zeitpunkt der Träger 42 in einer flach geneigten Stellung befindet, wie in den Figuren 1 bis 5 dargestellt, befindet sich jeweils einer der Durchlässe 24, 26 teilweise innerhalb des Strahlungskegels 46, so dass direkte Röntgenstrahlung auf diesen Durchlass 24, 26 gerichtet ist.

Der Trägertisch 30 besitzt vier auf dem Boden der Kabine 14 abgestützte vertikale Beine, die an ihren oberen Enden durch zwei Querträger und zwei Längsträger miteinander verbunden sind. Die beiden Querträger bilden eine Auflage für die beiden hintereinander angeordneten Kettenförderer 34, 36, die jeweils zwei parallele Förderketten aufweisen und in der Mitte der Durchleuchtungskabine 14 einen geringen Abstand voneinander aufweisen. Die Obertrume der Förderketten bilden eine horizontale Auflagefläche für die Räder 12.

Die beiden Längsträger umfassen Linearführungen für einen Schlitten 48 der Manipulationseinrichtung 32, der mittels eines Antriebs (nicht dargestellt) entlang der ebenen Oberseite der Längsträger in Transportrichtung vor und zurück verfahren werden kann. Der Schlitten 48 trägt vier Arme 50 (nur zum Teil sichtbar), die sich beiderseits von einer vertikalen Längsmittelebene der Durchleuchtungskabine 14 paarweise gegenüberliegen, zur Anpassung an unterschiedliche Raddurchmesser um vertikale Schwenkachsen schwenkbar am Schlitten 48 montiert sind und jeweils eine nach oben zu verjüngte Kegelrolle 52 tragen. Wenn die Arme 50 aufeinander zu geschwenkt und gegen das Felgenhorn eines zu durchleuchtenden Rades 12 angepresst werden, wird das Rad 12 durch die Kegelform der Rollen 52 nach oben zu etwas vom einlaufseitigen Kettenförderer 34 abgehoben. Mindestens eine der Kegelrollen 52 ist mit einem Drehantrieb versehen, um das angehobene Rad 12 zur Durchleuchtung um seine Mittelachse zu drehen und in beliebigen Drehstellungen anzuhalten. Nach der Durchleuchtung wird der Schlitten 48 über den auslaufseitigen Kettenförderer 36 verfahren und die Arme 50 auseinanderbewegt, um das Rad 12 auf dem Kettenförderer 36 abzusetzen und mit diesem durch den Durchlass 26 in die Auslaufschleuse 22 zu fördern.

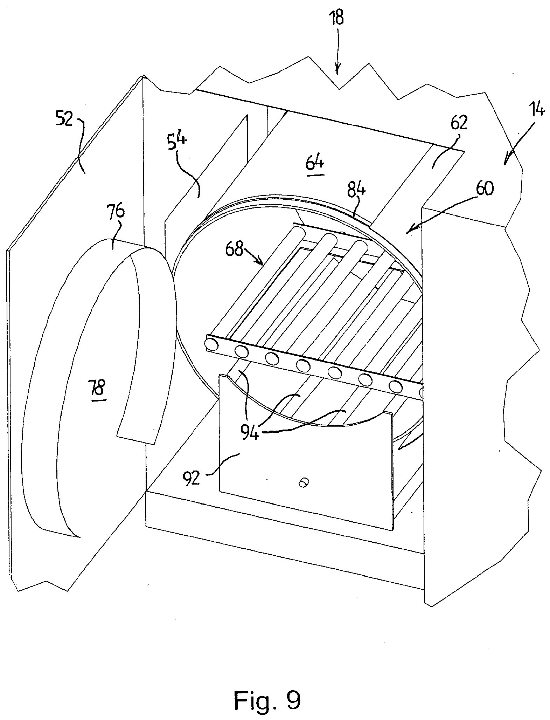

Wie am besten in den Figuren 1 bis 3 dargestellt, sind die beiden quaderförmigen Schleusenkabinen 16, 18 schmaler als die Durchleuchtungskabine 14, um den Platzbedarf der Vorrichtung zu 10 reduzieren. Jede Schleusenkabine besitzt vier vertikale Wände, von denen mindestens eine der beiden Seitenwände beiderseits des Transportwegs als Türe 52 ausgebildet ist, wie in Fig. 9 dargestellt. Diejenige Wand an der zur Durchleuchtungskabine 14 benachbarten Seite wird von der mit dem Durchlass 24, 26 versehenen und mit dem Sandwich-Schichtmaterial aus Stahl-und Bleischichten belegten Wand der Durchleuchtungskabine 14 gebildet. Die gegenüberliegende Wand der Schleusenkabinen 16, 16 ist mit einer als Einlass bzw. Auslass dienenden Öffnung 54 versehen, die mit den Durchlässen 24, 26 fluchtet. Vor bzw. hinter diesen Öffnungen 54 ist außerhalb der Schleusenkabine 16, 18 ein Einlass- bzw. Auslassförderer 56 in Form eines Rollenförderers mit angetriebenen Rollen angeordnet.

Wie nachfolgend am Beispiel der Einlassschleuse 20 beschrieben wird, befindet sich innerhalb von jeder Schleusenkabine 16, 18 ein drehbarer Hohlzylinder 60 mit zwei entgegengesetzten offenen Stirnenden und einer mit einem Sandwich-Schichtmaterial aus Stahl- und Bleischichten belegten Umfangswand 62, in der eine einzige Rad-Durchtrittsöffnung 64 ausgespart ist.

Der Hohlzylinder 60 kann mittels eines darunter angeordneten Drehantriebs 66 um eine orthogonal zur Transportrichtung ausgerichtete horizontale Drehachse in Drehung versetzt werden, um die Durchtrittsöffnung 64 abwechselnd vor den Einlass 54 bzw. vor den Durchlass 24 zu bewegen. Innerhalb des Hohlzylinders 60 befindet sich ein stationärer Rollenförderer 68 der Fördereinrichtungen, der die Räder 12 mit Hilfe von angetriebenen Förderrollen durch die Schleuse 20 fördert.

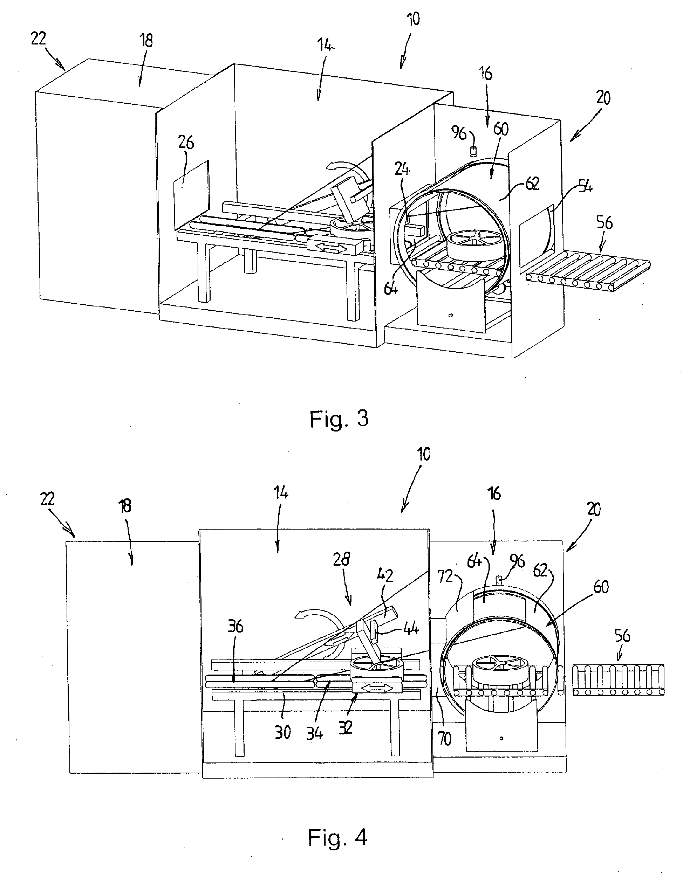

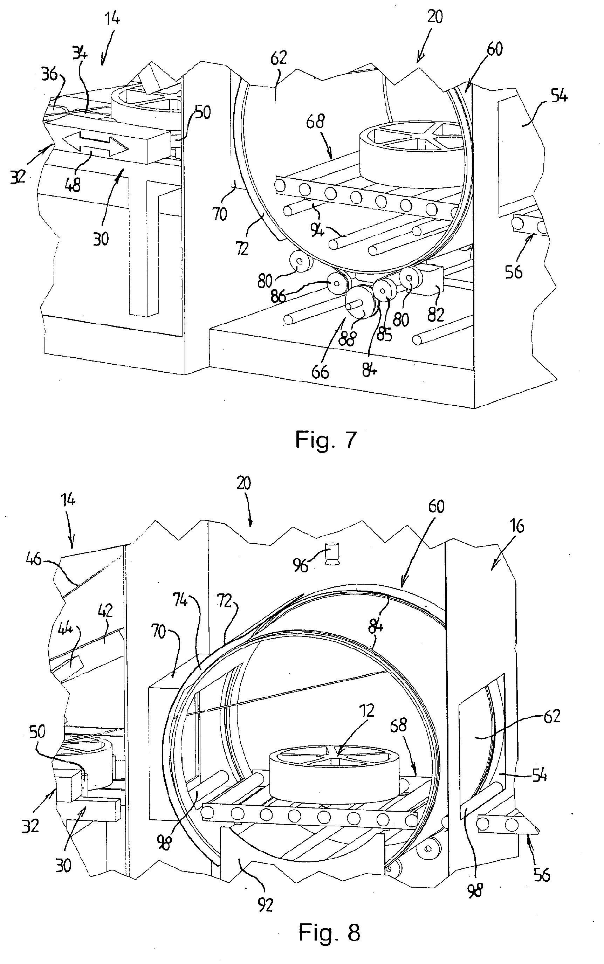

An der mit dem Durchlass 24 bzw. 26 versehenen Wand der Durchleuchtungskabine 14 ist innerhalb der benachbarten Schleusenkabine 16, 18 jeweils ein Kragen 70 aus einem bleihaltigen Material befestigt, der den Durchlass 24 bzw. 26 umgibt. Wie am besten in den Figuren 4, 5, 7 und 8 dargestellt, trägt der Kragen 70 an seiner dem Hohlzylinder 60 zugewandten Seite eine gebogene teilzylindrische Platte 72, die aus einem Sandwich-Schichtmaterial aus Stahl- und Bleischichten besteht und an allen Seiten über den Kragen 70 übersteht. Die Platte 72 weist einen konstanten radialen Abstand von der Umfangswand 62 des Hohlzylinders 60 auf und besitzt einen etwas größeren Krümmungsradius, so dass zwischen der Platte 72 und der Umfangswand 62 ein Spalt 74 mit konstanter Spaltweite gebildet wird. Die Platte 72 erstreckt sich in axialer Richtung des Hohlzylinders 60 nahezu über dessen gesamte Länge, während in Umfangsrichtung des Hohlzylinders 60 ihr Überstand beiderseits vom Kragen 70 etwa der lichten Weite der Durchtrittsöffnung 64 im Hohlzylinder 60 entspricht.

Wie am besten in Fig. 9 am Beispiel von der oder einer Türe 52 der Schleusenkabine 18 dargestellt, sind die Türen 52 jeweils zum Öffnen und Schließen um eine vertikale Schwenkachse schwenkbar. Über die Innenseite jeder Türe 52 steht ein nach unten offener ringförmiger Steg 76 über, der aus dem Sandwich-Schichtmaterial aus Stahl-und Bleischichten besteht, bei geschlossener Türe 52 das benachbarte offene Stirnende des Hohlzylinders 60 entlang von einem Großteil des Umfangs und insbesondere an dessen Oberseite und an dessen Seiten umgibt und das auf der Seite des Kragens 70 in den Spalt 74 zwischen der gekrümmten Platte 72 und der Umfangswand 62 des Hohlzylinders 60 ragt. Dadurch wird entlang des Stegs 76 eine Art Labyrinth erzeugt, das einen Austritt von Röntgenstrahlung aus dem Hohlzylinder 60 praktisch verhindert.

Gegenüber von den offenen Stirnenden des Hohlzylinders 60 sind die Türen 52 bei 78 an ihren Innenseiten ebenfalls mit dem Sandwich-Schichtmaterial aus Stahl- und Bleischichten belegt, das sich in radialer Richtung des Hohlzylinders 60 etwas nach außen über dessen äußeren Umfang hinaus bzw. bis zum Steg 76 erstreckt, so dass dort keine Röntgenstrahlung aus dem Inneren des Hohlzylinders 60 durch die Wand bzw. Türe 52 hindurch in die Umgebung gelangen kann.

Abgesehen von dem Kragen 70, der Platte 72, dem Steg 76 und dem Sandwich-Schichtmaterial bei 78 an den Innenseiten der Türen 52 sind jedoch die übrigen Wände, der Boden und die Decke der Schleusenkabinen 16, 18 nicht oder nur mit einer relativ dünnen Abschirmung aus bleihaltigem Material versehen, da aufgrund der zuvor beschriebenen Maßnahmen praktisch keine Röntgenstrahlung aus dem Hohlzylinder 60 heraus oder an dem Hohlzylinder 60 vorbei in die Schleusenkabine 16, 18 gelangen kann.

Zur drehbaren Lagerung des Hohlzylinders 60 stützt sich dieser auf vier Stützrollen 80 ab, die paarweise in der Nähe der beiden Stirnenden des Hohlzylinders 60 angeordnet sind. Der Drehantrieb 66 des Hohlzylinders 60 umfasst einen Umschlingungstrieb mit zwei Zahnriemen 84, die an den Stirnenden des Hohlzylinders 60 und neben den seitlichen Rändern der gebogenen Platte 72 um einen Großteil von dessen äußerem Umfang herum verlaufen und unterhalb des Hohlzylinders 60 über eine feste Umlenkrolle 85, eine bewegliche Spannrolle 86 sowie ein Antriebszahnrad 88 auf einer über ein Getriebe 82 von einem elektrischen Antriebsmotor 90 angetriebenen Welle herum geführt sind. Die Enden der Welle sind in zwei gegenüberliegenden Seitenwangen 92 drehbar gelagert, die an ihren Innenseiten (nicht sichtbar) mit Führungen für die Spannrollen 83, Drehlagern für die Umlenkrollen 82 sowie höhenverstellbaren Stützelementen für die Stützrollen 80 versehen sind.

Die beiden Seitenwangen 92 stehen jenseits der Stirnenden des Hohlzylinders 60 nach oben über den Boden der Schleusenkabine über, wobei sie sich in einem geringen Abstand von den Innenseiten der Türen 52 durch Lücken an der Unterseite der Stege 76 nach oben erstrecken. Die Seitenwangen 92 sind unterhalb von ihrem konkav gekrümmten oberen Rand durch mehrere Querverstrebungen 94 miteinander verbunden, die zusammen mit den Seitenwangen 92 den Rollenförderer 68 nebst dessen Antrieb (nicht dargestellt) tragen, so dass der Rollenförderer 68 ebenso wie der Hohlzylinder 60 über die Seitenwangen 92 auf dem Boden der Schleusenkabine 16, 18 abgestützt ist.

In der Schleusenkabine 16 der Einlassschleuse 20 ist oberhalb von dem Hohlzylinder 60 eine Kamera 96 montiert. Mit der Kamera 96 werden die auf dem Rollenförderer 68 der Einlassschleuse 20 liegenden Räder 12 erfasst, wenn die Durchtrittsöffnung 64 in der Umfangswand 62 des Hohlzylinders 60 nach oben weist, wie in Fig. 2 und 4 dargestellt. Die Erfassung dient zur Bestimmung oder Kontrolle der Größe und des Typs sowie ggf. weiterer Parameter der Räder 12, um diese bei der anschließenden Durchleuchtung in der Durchleuchtungskabine 14 zur Steuerung der Durchleuchtungseinrichtung 28 und der Manipulationseinrichtung 32 zu nutzen.

Die Rollenförderer 68 sind unterhalb von den Drehachsen der Hohlzylinder 60 vollständig im Inneren derselben angeordnet, wobei ihre entgegengesetzten Enden jeweils einen geringen Abstand von deren Umfangswand 62 aufweisen. Dadurch ist jeder Hohlzylinder 60 um den zugehörigen Förderer 68 drehbar, wobei sich seine Umfangswand 60 vor den beiden entgegengesetzten Enden des Förderers 68 vorbeibewegen kann, um die Durchtrittsöffnung 64 abwechselnd vor eines der beiden Enden zu bewegen.

Darüber hinaus umfassen die Fördereinrichtungen innerhalb der Schleusenkabinen 16, 18 noch jeweils zwei zusätzliche Förderrollen 98. Die beiden Förderrollen 98 sind in derselben Höhe wie die Förderrollen des Rollenförderers 68 außerhalb des Hohlzylinders 60 zwischen dessen Umfangswand 62 und den mit dem Durchlass 24, 26 bzw. dem Einlass 56 oder Auslass versehenen Wänden der Schleusenkabine 16, 18 angeordnet und können ggf. angetrieben sein.

Sämtliche Förderer 34, 36, 56, 68 bilden mit ihren Oberseiten eine horizontale Auflagefläche für die Räder 12, wodurch der definierte geradlinige horizontale Transportweg der Räder 12 innerhalb der Vorrichtung 10 bereitgestellt wird.

## Patentansprüche

1. Vorrichtung zur zerstörungsfreien Materialprüfung von Gegenständen, insbesondere von Felgen oder Rädern (12) aus Leichtmetallguss, mit einer Durchleuchtungskabine (14), die eine Durchleuchtungseinrichtung (28) zum Durchleuchten der Gegenstände enthält, sowie mit mindestens einer Schleuse (20, 22) und Fördereinrichtungen (34, 36, 56, 68, 98) zum Fördern der Gegenstände durch die mindestens eine Schleuse (20, 22) in die Durchleuchtungskabine (14) und aus der Durchleuchtungskabine (14) heraus, wobei die Schleuse (20, 22) einen Hohlzylinder (60) umfasst, dessen Umfangswand (62) eine Durchtrittsöffnung (64) für die durch den Hohlzylinder (60) geförderten Gegenstände aufweist und der um die zu einer Transportrichtung der Gegenstände senkrechte Zylinderachse als seine Drehachse drehbar ist, um die Durchtrittsöffnung (64) abwechselnd auf einer von der Durchleuchtungskabine (14) abgewandten Seite der Schleuse (20, 22) oder auf einer der Durchleuchtungskabine (14) zugewandten Seite der Schleuse (20, 22) zu positionieren, **dadurch gekennzeichnet, dass** die Zylinderachse des Hohlzylinders (60) horizontal ausgerichtet ist.

2. Vorrichtung nach Anspruch 1, **dadurch gekennzeichnet, dass** die Fördereinrichtungen (34, 36, 56, 68, 98) in der oder jeder Schleuse (20, 22) einen vollständig vom Hohlzylinder (60) umgebenen Förderer (68) mit einer zur Drehachse parallelen Auflagefläche für die Gegenstände umfassen.

3. Vorrichtung nach Anspruch 2, **dadurch gekennzeichnet, dass** die Auflagefläche des Förderers (68) im Abstand unterhalb der Drehachse angeordnet ist.

4. Vorrichtung nach Anspruch 2 oder 3, **dadurch gekennzeichnet, dass** der Förderer (68) zwei entgegengesetzte Enden aufweist, die in der in der Nähe der Umfangswand (62) des Hohlzylinders (62) angeordnet sind.

5. Vorrichtung nach einem der Ansprüche 2 bis 4, **dadurch gekennzeichnet, dass** der Hohlzylinder (60) mindestens ein offenes Stirnende aufweist und dass der Förderer (68) von Stützen (92, 94) getragen wird, die sich durch das offene Stirnende des Hohlzylinders (60) erstrecken.

6. Vorrichtung nach Anspruch 5, **dadurch gekennzeichnet, dass** der Hohlzylinder (60) zwei offene Stirnenden aufweist und dass sich die Stützen (92, 94) durch beide offene Stirnenden des Hohlzylinders (60) erstrecken.

7. Vorrichtung nach einem der vorangehenden Ansprüche, **dadurch gekennzeichnet, dass** die Umfangswand (62) des Hohlzylinders (60) aus einem bleihaltigen Material besteht.

8. Vorrichtung nach einem der vorangehenden Ansprüche, **dadurch gekennzeichnet, dass** die Schleuse (20, 22) eine den Hohlzylinder (60) umgebende Schleusenkabine (16, 18) aufweist, deren Wände, Decke und Boden im Bereich des offenen Stirnendes oder der offenen Stirnenden des Hohlzylinders (60) sowie um einen Durchlass (24, 26) zur Durchleuchtungskabine (14) herum mit einer bleihaltigen Abschirmung versehen sind.

9. Vorrichtung nach einem der vorangehenden Ansprüche, **dadurch gekennzeichnet, dass** die Schleuse (20, 22) eine den Hohlzylinder (60) umgebende Schleusenkabine (16, 18) aufweist und dass im Bereich des offenen Stirnendes oder den offenen Stirnenden des Hohlzylinders (60) ein Steg (76) aus einem bleihaltigen Material nach innen über eine benachbarte Wand (52) der Schleusenkabine (16, 18) übersteht, wobei er sich in axialer Richtung entlang von einem Teil der Umfangswand (62) des Hohlzylinders (60) erstreckt und mit der Umfangswand (62) einen Spalt begrenzt.

10. Vorrichtung nach einem der vorangehenden Ansprüche, **gekennzeichnet durch** einen zwischen der Umfangswand (62) des Hohlzylinders (60) und der Durchleuchtungskabine (14) angeordneten Kragen (70) aus einem bleihaltigen Material, der einen zur Durchleuchtungskabine (14) führenden Durchlass (24, 26) umgibt.

11. Vorrichtung nach Anspruch 10, **gekennzeichnet durch** eine am Kragen (70) angebrachte überstehende Platte (72) aus einem bleihaltigen Material mit einer dem Hohlzylinder (60) zugewandten gekrümmten Oberfläche, die sich in axialer Richtung und in Umfangsrichtung entlang von einem Teil der Umfangswand (62) des Hohlzylinders (60) erstreckt und mit der Umfangswand (62) einen Spalt (74) begrenzt.

12. Vorrichtung nach einem der vorangehenden Ansprüche, **dadurch gekennzeichnet, dass** der Hohlzylinder (60) mit seiner Umfangswand (62) auf drehbaren Stützrollen (80) abgestützt ist.

13. Vorrichtung nach einem der vorangehenden Ansprüche, **gekennzeichnet durch** einen Umschlingungstrieb (84, 88) zum Antreiben des Hohlzylinders (60).

14. Vorrichtung nach Anspruch 13, **dadurch gekennzeichnet, dass** der Umschlingungstrieb (84, 88) mindestens einen Zahnriemen (84) umfasst, der um einen Teil der Umfangswand (62) des Hohlzylinders (60) und um ein stationäres Antriebszahnrad (88) herum verläuft.

15. Vorrichtung nach einem der vorangehenden Ansprüche, **gekennzeichnet durch** eine oberhalb des Hohlzylinders (60) in der Schleuse (20) angeordnete Kamera (96), welche die Gegenstände durch die Durchtrittsöffnung (64) in der Umfangswand (62) des Hohlzylinders (60) hindurch visuell erfasst.

## Claims

1. An apparatus for non-destructive material testing of objects, in particular rims or wheels (12) made of light metal casting, having a fluoroscopy chamber (14) that contains a fluoroscopy device (28) for screening the objects, and having at least one lock (20, 22) and conveyor devices (34, 36, 56, 68, 98) for conveying the objects through the at least one lock (20, 22) into the fluoroscopy chamber (14) and out of the fluoroscopy chamber (14), wherein the lock (20, 22) comprises a hollow cylinder (60), the circumferential wall (62) of which has a through opening (64) for the objects conveyed through the hollow cylinder (60) and which is rotatable about the cylinder axis as its rotary axis that is orthogonal to a transporting direction of the objects in order to position the through opening (64) alternately on a side of the lock (20, 22) that faces away from the fluoroscopy chamber (14) or on a side of the lock (20, 22) that faces toward the fluoroscopy chamber (14), **characterized in that** the cylinder axis of the hollow cylinder (60) is oriented horizontally.

2. The apparatus as claimed in claim 1, **characterized in that** the conveyor devices (34, 36, 56, 68, 98) in the or in each lock (20, 22) include a conveyor (68) entirely surrounded by the hollow cylinder (60) and having a supporting surface for the objects that is parallel to the rotary axis.

3. The apparatus as claimed in claim 2, **characterized in that** the supporting surface of the conveyor (68) is arranged in a distance below the rotary axis.

4. The apparatus as claimed in 2 or 3, **characterized in that** the conveyor (68) has two opposed ends, which are located in the vicinity of the circumferential wall (62) of the hollow cylinder (60).

5. The apparatus as claimed in claims 2 through 4, **characterized in that** the hollow cylinder (60) has at least one open end, and that the conveyor (68) is carried by supports (92, 94), which extend through the open end of the hollow cylinder (60).

6. The apparatus as claimed in claim 5, **characterized in that** the hollow cylinder (60) has two open ends, and that the supports (92, 94) extend through both open ends of the hollow cylinder (60).

7. The apparatus as claimed in one of the preceding claims, **characterized in that** the circumferential wall (62) of the hollow cylinder (60) is made of a lead-containing material.

8. The apparatus as claimed in one of the preceding claims, **characterized in that** the lock (20, 22) has a lock chamber (16, 18) surrounding the hollow cylinder (60), the walls, ceiling and floor of which chamber are provided with a lead-containing shield in the region of the open end or the open ends of the hollow cylinder (60) and around a passage (24, 26) to the fluoroscopy chamber (14).

9. The apparatus as claimed in one of the preceding claims, **characterized in that** the lock (20, 22) has a lock chamber (16, 18) surrounding the hollow cylinder (60), and that in the region of the open end or the open ends of the hollow cylinder (60) a web (76) of a lead-containing material protrudes inwardly beyond an adjacent wall (52) of the lock chamber (16, 18), extending in the axial direction along a portion of the circumferential wall (62) of the hollow cylinder (60) and defining a gap with the circumferential wall (62).

10. The apparatus as claimed in one of the preceding claims, **characterized by** a collar (70) of a lead-containing material located between the circumferential wall (62) of the hollow cylinder (60) and the fluoroscopy chamber (14), which surrounds a passage (24, 26) leading to the fluoroscopy chamber (14).

11. The apparatus as claimed in claim 10, **characterized by** a protruding plate (72) of a lead-containing material mounted to the collar (70) and having a curved surface facing toward the hollow cylinder (60), which extends in the axial direction and in the circumferential direction along a portion of the circumferential wall (62) of the hollow cylinder (60) and defines a gap (74) with the circumferential wall (62).

12. The apparatus as claimed in one of the preceding claims, **characterized in that** the hollow cylinder (60) is supported with its circumferential wall (62) on rotatable support rollers (80).

13. The apparatus as claimed in one of the preceding claims, **characterized by** a belt drive (84, 88) for driving the hollow cylinder (60).

14. The apparatus as claimed in claim 13, **characterized in that** the belt drive (84, 88) comprises at least one toothed belt (84), which extends around a portion of the circumferential wall (62) of the hollow cylinder (60) and around a stationary drive gear wheel (88).

15. The apparatus as claimed in one of the preceding claims, **characterized by** a camera (96), located above the hollow cylinder (60) in the lock (20), which visually detects the objects through the through opening (64) in the circumferential wall (62) of the hollow cylinder (60).

## Revendications

1. Dispositif de vérification non destructive de matériau d'objets, en particulier de jantes ou de roues (12) en fonte légèrement alliée, avec une cabine de radioscopie (14), qui contient un système de radioscopie (28) pour éclairer par transparence les objets, ainsi qu'avec au moins un sas (20, 22) et des systèmes de convoyage (34, 36, 56, 68, 98) servant à convoyer les objets à travers l'au moins un sas (20, 22) dans la cabine de radioscopie (14) et hors de la cabine de radioscopie (14), dans lequel le sas (20, 22) comprend un cylindre creux (60), dont la paroi périphérique (62) présente une ouverture de passage (64) pour les objets convoyés à travers le cylindre creux (60) et qui peut tourner autour de l'axe de cylindre perpendiculaire par rapport à une direction de transport des objets en tant que son axe de rotation afin de positionner l'ouverture de passage (64) en alternance sur un côté, opposé de la cabine de radioscopie (14), du sas (20, 22) ou sur un côté, tourné vers la cabine de radioscopie (14), du sas (20, 22), **caractérisé en ce que** l'axe de cylindre du cylindre creux (60) est orienté de manière horizontale.

2. Dispositif selon la revendication 1, **caractérisé en ce que** les systèmes de convoyage (34, 36, 56, 68, 98) comprennent dans le ou chaque sas (20, 22) un convoyeur (68) entouré en totalité par le cylindre creux (60) avec une surface d'appui, parallèle à l'axe de rotation, pour les objets.

3. Dispositif selon la revendication 2, **caractérisé en ce que** la surface d'appui du convoyeur (68) est disposée à distance sous l'axe de rotation.

4. Dispositif selon la revendication 2 ou 3, **caractérisé en ce que** le convoyeur (68) présente deux extrémités opposées, qui sont disposées à proximité de la paroi périphérique (62) du cylindre creux (62).

5. Dispositif selon l'une quelconque des revendications 2 à 4, **caractérisé en ce que** le cylindre creux (60) présente au moins une extrémité frontale ouverte, et que le convoyeur (68) est supporté par des montants (92, 94), qui s'étendent à travers l'extrémité frontale ouverte du cylindre creux (60).

6. Dispositif selon la revendication 5, **caractérisé en ce que** le cylindre creux (60) présente deux extrémités frontales ouvertes et que les montants (92, 94) s'étendent à travers deux extrémités frontales ouvertes du cylindre creux (60).

7. Dispositif selon l'une quelconque des revendications précédentes, **caractérisé en ce que** la paroi périphérique (62) du cylindre creux (60) est constituée d'un matériau contenant du plomb.

8. Dispositif selon l'une quelconque des revendications précédentes, **caractérisé en ce que** le sas (20, 22) présente une cabine de sas (16, 18) entourant le cylindre creux (60), dont les parois, le plafond, le sol sont pourvus d'un blindage contenant du plomb dans la zone de l'extrémité frontale ouverte ou des extrémités frontales ouvertes du cylindre creux (60) ainsi que tout autour d'un passage (24, 26) menant vers la cabine de radioscopie (14).

9. Dispositif selon l'une quelconque des revendications précédentes, **caractérisé en ce que** le sas (20, 22) présente une cabine de sas (16, 18) entourant le cylindre creux (60), ou qu'une nervure (76) composée d'un matériau contenant du plomb dépasse vers l'intérieur au-delà d'une paroi (52) adjacente de la cabine de sas (16, 18) dans la zone de l'extrémité frontale ouverte ou des extrémités frontales ouvertes du cylindre creux (60), dans lequel elle s'étend dans une direction axiale le long d'une partie de la paroi périphérique (62) du cylindre creux (60) et délimite une fente avec la paroi périphérique (62).

10. Dispositif selon l'une quelconque des revendications précédentes, **caractérisé par** un rebord (70) composé d'un matériau contenant du plomb disposé entre la paroi périphérique (62) du cylindre creux (60) et la cabine de radioscopie (14), qui entoure un passage (24, 26) menant vers la cabine de radioscopie (14).

11. Dispositif selon la revendication 10, **caractérisé par** une plaque (72) composée d'un matériau contenant du plomb, qui dépasse, installée au niveau du rebord (70), avec une surface incurvée tournée vers le cylindre creux (60), qui s'étend dans une direction axiale et dans une direction périphérique le long d'une partie de la paroi périphérique (62) du cylindre creux (60) et délimite une fente (74) avec la paroi périphérique (62).

12. Dispositif selon l'une quelconque des revendications précédentes, **caractérisé en ce que** le cylindre creux (60) prend appui par sa paroi périphérique (62) sur des rouleaux de support (80) pouvant tourner.

13. Dispositif selon l'une quelconque des revendications précédentes, **caractérisé par** un entraînement à enroulement (84, 88) servant à entraîner le cylindre creux (60).

14. Dispositif selon la revendication 13, **caractérisé en ce que** l'entraînement à enroulement (84, 88) comprend au moins une courroie dentée (84), qui s'étend tout autour d'une partie de la paroi périphérique (62) du cylindre creux (60) et tout autour d'une roue dentée d'entraînement (88) stationnaire.

15. Dispositif selon l'une quelconque des revendications précédentes, **caractérisé par** une caméra (96) disposée au-dessus du cylindre creux (60) dans le sas (20), laquelle détecte visuellement les objets à travers l'ouverture de passage (64) dans la paroi périphérique (62) du cylindre creux (60).
